# EUROPEAN PATENT APPLICATION

(11) **EP 3 875 174 A1**
(43) Date of publication of application: **08.09.2021**
(21) Application number: 21160653.8
(22) Date of filing: 04.03.2021
(51) Int. Cl.: B05B 7/26, A01M 7/00, A23B 7/157, A23L 3/358, B08B 3/00, C02F 1/78, B01F 3/04

(54) **SYSTEM FOR THE CONTINUOUS SPRAYING OF OZONATED WATER AND DEVICE FOR OZONE PRODUCTION TO BE USED IN SUCH SYSTEM**

(30) Priority: 05.03.2020 IT 202000004732
(71) Applicant: Bionaturae S.r.l., 24060 Bolgare (BG) (IT)
(72) Inventor: FESTA, Gianfranco, 25032 Chiari (BS) (IT)
(74) Representative: Autuori, Angelo

(57) **Abstract**

A system for spraying ozonated water towards a surface to be treated (T), comprising a device (1) for continuously producing ozonated water, means (70) for spraying ozonated water (AO) towards the surface to be treated (T) and a conduit (17) for the fluidic connection of the device (1) and the spraying means (70). The conduit (17) is interposed between the spraying means (70) and device (1) so that the ozonated water (AO) produced by the device (1) is continuously sprayed by the spraying means (70).

## Description

The present invention generally relates to the field of systems for producing ozonated water and particularly it relates to a system for spraying ozonated water and a device for producing ozonated water that can be used in such device.

### State of the Art

Devices for producing ozonated water starting from water and air to obtain ozonated water, that is water containing ozone in solution and dispersed therein are known. Generally, such devices provide for a mixer having an inlet for a liquid, an inlet for ozone and an outlet for ozonated water.

As known, ozone in water has a biological half-life in the order of 20 minutes at room temperature, which entails a rapid decrease in the concentration thereof in ozonated water.

In some fields it is necessary to have a certain concentration of ozone in water. An example is the use of ozonated water as plant protection product in which ozone must have a certain minimum concentration in order for the treatment to be effective.

To this end, known devices provide for a recirculation circuit to increase the ozone concentration in the water which is then stored in a tank. In particular, as schematically illustrated in the attached figures, such devices **D** provide for the storage tank **S** and a recirculation circuit **C** passing through the mixer **M** so that the latter is supplied with ozonated water **AO** coming from the tank **S** to increase the concentration of ozone in water at each pass through and thus in the tank **S.** The ozone is produced by means of a generator **G** which supplies the mixture **M,** while the ozonated water will be sprayed by means of nozzles **U.**

A drawback of such devices lies in the fact that once the water in the tank has the required concentration, it must be used immediately before the ozone degrades. Furthermore, a subsequent use requires waiting until all the water in the tank reaches the required concentration again.

Generally, the sprayers currently used for antiparasitic treatments include sprayers with a 3000-litre tank and an up to 30-40 litres/minute flow rate. Therefore, it takes 60 - 75 minutes to empty the tank. The use time is therefore much longer than the biological half-life time of ozone in water. In other words, after half an hour, the ozonated water sprayed with such systems has a significantly low ozone concentration, such to make the treatment substantially ineffective.

Furthermore, existing systems for spraying ozonated water towards plants with plant protection purposes using such devices for producing ozonated water are expensive and inefficient. Furthermore, systems known to have spraying effectiveness require that the outflow flow be sprayed with an atomised jet which makes such systems particularly expensive and impractical.

### Summary of the invention

An object of the present invention is to at least partly overcome the drawbacks illustrated above, by providing a device for producing ozonated water that is highly functional and cost-effective.

Another object of the invention is to provide a device for continuously generating ozonated ed water.

Another object of the present invention is to provide a device for generating ozonated water that can be easily displaced or transferred.

Another object of the present invention is to provide a device for generating ozonated water with a high ozone concentration of ozone.

A further object of the present invention is to provide a system for spraying ozonated water towards a surface to be treated that is highly functional and cost-effective.

Another object of the present invention is to provide a system for spraying ozonated water that can be easily displaced or transferred.

A further object of the present invention is to provide a method for spraying ozonated water towards a surface to be treated that is highly functional and cost-effective.

These objects, just like others that will be more apparent hereinafter, are attained by a device for producing ozonated water, a system for spraying ozonated water and by a method for continuously spraying ozonated water as described, illustrated and/or claimed herein.

The dependent claims describe advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:

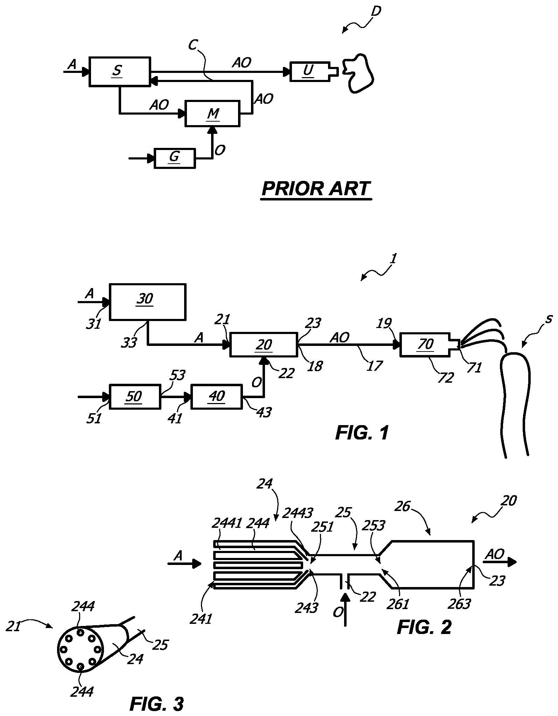

**FIG. 1** is a schematic view of a spraying system **100;**
**FIG. 2** is a schematic view of a mixer **20;**
**FIG. 3** is an axonometric view of some details of the mixer **20.**

### Detailed description of some preferred embodiments

With reference to the attached figures herein described is a system **100** for spraying ozonated water **AO** towards a surface **S** to be treated. The expression "ozonated water" is used to indicate water containing ozone in solution and/or gaseous ozone dispersed in a liquid phase.

For example, the system **100** may be used to spray ozonated water **AO** towards plants for example from fruit or vine plants, towards crops with low growth in height, for example vegetables, or towards any type of plant. In other words, ozonated water **AO** may be used to perform a plant protection treatment, in particular covering treatment.

Such embodiment is not exclusive. As a matter of fact, the spraying system **100** may be particularly suitable for carrying out cleaning and/or sanitising treatments on different types of surfaces, such as for example in cellar barrels, cisterns or tanks and generally must or wine containers, a floor, food workbenches, for example meat processing workbenches, surfaces and equipment at slaughter premises or the like, but also carcasses of dead or slaughtered animals or carcasses intended for human or animal consumption.

Suitably, therefore, the spraying system **100** may comprise a device **1 for** producing ozonated water **AO** and spraying means **70** fluidically connected to the device **1** for spraying ozonated water **AO.**

Suitably, a conduit **17** for fluidically connecting the device **1** and the spraying means **70** so that all the ozonated water **AO** produced by the device **1** is sprayed by the spraying means **70** may be provided for. Preferably, such conduit **17** may have an inlet **18** connected with the device **1** and an outlet **19** connected with the spraying means **70** and may be without outlets so that all the ozonated water **AO** flowing out from the device **1** flows out from the spraying means **70.** Preferably, the conduit **17** may be without openings. In this manner, both the inflow and outflow of further gas or liquid into/out of the conduit **17** may be avoided.

Furthermore, the conduit **17** may be without storage tanks and/or areas for the storage of the ozonated water.

The spraying means **70** may comprise at least one nozzle **71.** Possibly, a plurality of nozzles **71** and/or manifolds **72** for supporting nozzles of the per se known type may be provided for.

It is clear that the type of spraying means **70** may be different depending on the surface to be treated **T** and/or the size of the equipment. For example, it may be a single nozzle **71,** or a manifold **72** with a plurality of nozzles **71** may be provided for. Possibly, a single lance or a distribution bar may be provided for.

The device **1** may be configured to produce ozonated water **AO** starting from water **A** and from a gas **O** containing ozone preferably with a concentration higher than 0.5% by weight, preferably **higher** than 1% by weight, even more preferably higher than 2% by weight.

Hereinafter, reference will simply be made to ozone **O** such gas being deemed to contain ozone. This gas may for example be air enriched with ozone.

In particular, as better explained hereinafter, the device **1** may be configured to continuously produce ozonated water **AO.**

Essentially, the device **1** may comprise a mixer **20** which may have an inlet **21** for the water **A,** an inlet **22** for the ozone **O** and an outlet **23** for the mixture of water and ozone **AO,** that is ozonated water.

The conduit **17** may be connected to the outlet **23** of the mixer **20.** In other words, the outlet **23** of the mixer **20** may substantially coincide with the outlet **19** of the device **1.**

In this manner, the ozonated water **AO** flowing out from the mixer **20** may be sprayed by the nozzles **70** in a substantially continuous manner.

The inlet **22** of the mixer **20** may be fluidically connected to means for supplying ozone **O,** for example, an ozone generator of the per se known type.

On the other hand, according to a preferred but non-exclusive embodiment of the invention, the system **100** may comprise a generator **40** for generating ozone **O.**

For example, the generator **40** may comprise an outlet **43** for the ozone **O** fluidically connected to the inlet **22** of the mixer **20.** For example, a conduit **11** may be provided for interposed between the outlet **43** and the inlet **22.**

The generator **40** may further comprise an inlet **41** for a gas, for example air, air enriched with oxygen, that is air having an oxygen content higher than 20% by volume, preferably of about 30% by volume. Possibly, the generator **40** may be supplied with gas having a particularly high concentration of oxygen, for example higher than 90% by volume, or higher than 99% by volume. Possibly, the generator may be supplied with gas coming from cylinders.

Suitably, therefore, an oxygen concentrator **50,** that is a device configured to increase the oxygen concentration in the air, may be provided for.

The concentrator **50** may be positioned upstream of the generator **40** so that the latter is supplied with air having a high oxygen concentration.

The oxygen concentrator **50** may have an inlet **51** for air **A** and an outlet **53** for air enriched with oxygen or oxygen. The outlet **53** may therefore be fluidically connected with the inlet **41** of the generator, for example by means of a conduit **12.**

The oxygen concentrator **50** and/or the ozone generator **40** may be of the per se known type.

For example, the concentrator may be of the known PSA type. This device may comprise an aspirator and/or compressor in a per se known manner.

As known, the efficiency and/or performance are linked to the design characteristics of the generator, for example to the capacity to dispose of the heat produced. The generator may be of the per se known type.

The inlet **21** of the mixer **20** may be fluidically connected to water supply means **A,** for example the water mains, or, according to a preferred but non-exclusive embodiment of the invention, a tank **30** for water **A** may be provided.

Suitably, the tank **30** may have an inlet **31** to allow filling thereof and an outlet **33** fluidically connected to the inlet **21** of the mixer **20.** For example, a conduit **13** may be provided for interposed between the latter inlet **21** and the outlet **33.**

Possibly, the mixer **20** may be a Venturi-effect mixer.

According to a particular aspect of the invention, a bubble generator **80** may be provided for so that the ozone has a high stability in the water **A.** Furthermore, this characteristic may allow to spray the ozonated water **AO** towards the surface to be treated **T** with a drop jet.

Preferably, such jet of ozonated water **AO** may not be atomised, that is the drops may be large in size.

The expression "size" of drops or bubbles is used to indicate the average diameter thereof.

As a matter of fact, the high number of bubbles allows an effective dispersion of ozone in the ozonated water **AO,** thus conferring a high efficacy in the treatment. It is therefore not necessary to spray a jet of atomised ozonated water while maintaining a high efficacy.

Furthermore, the small size of the bubbles also improves the dispersion of ozone in ozonated water **AO** and thus the effectiveness of the treatment.

The bubbles may be small in size, for example a size, that is a diameter smaller than 500µm, preferably smaller than 100µm.

Possibly, the bubbles may have a diameter in the order of micrometres. For example, they may have a diameter smaller than 50 µm, preferably they may have diameters between 1 and 50 µm, more preferably between 2 and 40 µm and even more preferably between 2 and 20 µm.

Possibly, the bubbles may have a diameter in the order of nanometres. For example, they may have a diameter smaller than 1µm, smaller than 500nm, preferably between 50nm and 100nm.

Preferably, the mixer **20** may be configured so as to generate the bubbles, that is it may also define the generator **80.**

In any case, the spraying nozzles **70** may be nozzles of the type normally used for spraying water with antiparasitic agent or herbicide. As a matter of fact, the device **1** may be used with the spraying means **70** normally used for plant protection treatments with pesticides such as antiparasitic agents, fungicides or the like. Furthermore, the particularly small dimensions of the bubbles in the ozonated water **AO** allow spraying by means of the systems normally used for plant protection treatments.

Possibly, the nozzles **71** may be configured to spray large-sized drops, for example in the order of a few millimetres.

In this manner, advantageously, the drops of such dimensions may have a particularly small surface per volume unit, thus minimising the loss of ozone at the outer surface of the drop at contact with the air.

Essentially, therefore, the mixer **20** may comprise the inlet **21** for the liquid and the outlet **23** for the liquid containing the microbubbles, that is the ozonated water **AO.**

The mixer **20** may have a convergent portion **24** and a divergent portion **26** arranged downstream of the convergent portion **24.** In other words, the portion **24** may comprise the inlet **21** while the portion **26** may comprise the outlet **23.**

Suitably, a substantially tubular portion **25,** interposed between the portions **24, 26,** may be provided for. The portion **25** may have an inner diameter substantially smaller than the diameter of the outlet **23.**

The inlet **22** for the ozone **O** may be arranged at the tubular portion **25.** The latter may therefore comprise a further opening **252'** for ozone **O.**

In other words, the mixer **20** may be a Venturi-effect mixer.

Furthermore, in this manner the rapid pressure-drop of the fluid between the tubular portion **25** and the divergent portion **26** may cause the formation of the microbubbles. For example, such a mixer may cause the formation of microbubbles through cavitation.

Suitably, a plurality of channels **244** positioned inside the convergent portion **24** to guide the flow of the inflowing liquid, that is water **A** may be provided for.

In particular, the convergent portion **24** may comprise an end **241** defining the inlet having a larger diameter and an opposite end **243** defining the outlet having a smaller diameter. Preferably the portion **24** may be frustoconical.

The end **243** may be coupled or coincide with the end **251** of the tubular portion **25.**

Suitably, the channels **244** may extend between the end **241** and the end **243** of the convergent portion **24.** Preferably, each channel may have an inlet **2441** which may therefore cooperate to define the inlet **21.** Furthermore, the channels **244** may have an outlet **2443** fluidically connected to the tubular portion **25.** Suitably, the outlet **2443** of a channel **244** may flow into a different channel **244** so that the inflowing liquid flow is channelled towards the inlet **251** of the tubular portion **25.**

The portion **26** may be symmetrical to the portion **24** with respect to the tubular portion **25.** In other words, as schematically illustrated in the attached figures, the liquid may pass through the inlet **241** and flow from the outlet **243** toward the inlet **251.** The liquid may then flow through the tubular portion **25** from the end **251** to the end **253.**

Therefore, the portion **26** may have an end **261** with smaller diameter which may be connected or coincide with the end **253** and an opposite end **263** with larger diameter which may define the outlet **23,** so that the liquid flows from the end **253** to the end **261** and from the latter it may flow through the portion **26** up to the end **263.**

The ends **243** and **251** may coincide, same case applying to the ends **253** and **261.**

It is clear that the portions **24, 25, 26** may have a convergent **24,** a cylindrical **25** and divergent **26** substantially tubular shape. In this case, each end **241, 251, 261** may comprise respective openings **241', 251', 261'** for the inflow of the fluid, while the ends **243, 253, 263** may comprise respective openings **243', 253', 263'** for the outflow of the fluid from the respective portion **24, 25, 26.**

Therefore, the openings **241'** and **263'** may define the inlet **22** and the outlet **23** of the mixer **20.**

Preferably, the openings **241'** and **263'** may have the same diameter, while the openings **243'** and **261'** may have the same diameter with respect to each other.

Thanks to such characteristics of the mixer **20,** the ozonated water **AO** flowing out from the outlet **23** may have a particularly high concentration of ozone **O.**

Suitably, furthermore, valve means **60,** configured to selectively allow the inflow of water **A** and/or ozone **O** into the mixer **20,** may be provided for.

In particular, the valve means **60** may act on one or more of the inlets **22, 21** so as to allow the selective inflow of gas **O** and/or water **A** into the mixer **20.** Possibly, adjustment means for adjusting the flow rate of gas **O** and/or water **A** in the mixer **20,** may be present. Such adjustment means may be of the per se known type and they may act on the conduits and/or on drive means and/or on pumping means.

Thanks to such characteristic, the selective spraying of ozonated water **AO** may be allowed.

According to a particular embodiment, the valve means **60** may be configured to allow/prevent the inflow of water **A** through the inlet **21** and/or to adjust the flow rate thereof, that is to say to adjust the flow. As a matter of fact, as described above, in this case shutting off the flow of water **A** may also cause a shut-off of the inflow of gas **O** into the mixer.

In this manner, the adjustment of the flow and therefore the flow rate of ozonated water **AO** sprayed may be carried out in a simple manner.

Furthermore, advantageously, such valve means **60** may be controlled by the operator by means of controls or levers of the known type. Possibly, the latter may be actuated even during use.

In this manner, the device **1** may be activated only when there arises the need to produce ozonated water **AO.** Such characteristic allows to save ozonated water and more generally energy. As a matter of fact, there may be no need to keep the ozone generator running continuously.

Furthermore, once the valve means **60** have been activated, the system **100** is capable of instantly producing ozonated water **AO** with the required concentration.

It is clear that pumping means may be provided for to cause the advancement of water and/or the ozone, same case applying to supply means of such pumping means, for example one or more motors or batteries, all of which may be of the per se known type.

For example, at least one pump for the water **A** interposed between the outlet **33** and the inlet **21** may be provided for. For example, a pump for suctioning from the tank **30** and/or a pump for delivery the mixer **20** may be provided for.

The pumping means may have an independent motor or they may be actuated by the power take-offs of an operating machine, for example of a tractor.

According to an aspect of the invention, an overpressure safety valve of the per se known type may be provided for between the outlet **18** and the inlet **19.** For example, such valve may be opened in the event of excessive pressure in the conduit **17** due, for example, to occasional shut-offs of the nozzles **71.**

Preferably, the valve may be of the spring type in which the pressure in the conduit **17** acts against a calibrated spring. This may allow to protect the pump for delivery to the mixer **20** from overloads with an adjustment on the spring.

Possibly, the discharge of the overpressure relief valve may be connected with the conduit **13** or with the tank **30.**

Similarly, if the pump for delivering the water **A** to the mixer **20** stalls, the flow of water **A** may be shut-off and consequently a back pressure may be formed on the flow of gas **O** which may therefore also prevent the introduction of gas **O** into the mixer **20** without the need for further valve means.

This allows to adjust the device **1** in a simple and fast manner.

According to a particular aspect of the invention, a support structure **5** for supporting the mixer **20,** the tank **30,** the generator **40** and/or the concentrator **50** may be provided for. Possibly, the spraying means **70** may also be coupled to the support structure **5** to be displaced therewith.

The system **100** may be transportable. Preferably, during use, the system **100** may be substantially stationary or it may be movable along an advancement direction so as to treat a large surface.

It is clear that the device **1** and therefore also the system **100** may have different dimensions depending on the requirements.

For example, according to a first embodiment, the system **100** may be large in size. For example, the tank **30** may contain about 3000 - 4000 litres, the mixer may be supplied up to 6 g/h of ozone **O** and the ozonated water **AO** flowing out from the mixer **20** may have a flow rate ranging from 3 to 100 litres/minute.

In this case, a driving unit, a tractor, a carriage or the like may be provided for so as to allow the displacement of the support structure **5** and therefore of the device **1.** Possibly, the tractor may include the support structure **5.**

The spraying means **70** may comprise a spraying bar **72** defining the manifold, and a plurality of nozzles **71** and they may be towed by the tractor.

The spraying bar **72** may have a different size depending on the needs. Possibly, known distribution bars or manifolds currently used for plant protection treatments or for the distribution of herbicides may be used.

According to a different embodiment, the system **100** may be small in size so as to facilitate the displacement thereof by an operator. For example, the tank **30** may contain about 5 litres of water, the mixer may be supplied with 1 g/h of ozone **O** and the ozonated water **AO** flowing out from the mixer **20** may have a flow rate of about 4 - 5 I/m.

In such case, the support structure **5** may be suitable to be worn by an operator, for example it may be a backpack or the like, so that the operator can displace the device **1.** The spraying means **70** may comprise a lance **73** and they may be gripped and operated by the operator.

As a matter of fact, the system **100** configured as described above may be particularly light. For example, it may weigh about 10 - 20 kg for backpack systems, 40 - 80 kg for wheelbarrow systems.

According to a further embodiment, the device **1** and the tank **30** may be arranged on a rack **5** of the type commonly used for the transportation of liquids, for example a carriage, while the operator may operate the lance **73** to spray the ozonated water **AO.**

In the light of the above, it is clear that the device **1** may be used for different uses which require the production of ozonated water **AO.** In particular, such device **1** may be particularly suitable for uses which require continuous production, a use which provides for a continuous alternation between use/non-use, and/or occasional use.

As a matter of fact, even if the ozonated water **AO** is stored in storage tanks, the ozone therein has a biological half-life in the order of 10 - 20 minutes, as a function of the temperature, which therefore entails a rapid decrease in the concentration of ozone in the ozonated water **AO** over time.

Possibly, existing machines or systems may be modified so that the machines or systems spray ozonated water **AO.**

For example, the device **1** may be installed on a tractor or a machine normally used for plant protection treatments, which generally comprise pumps, motors, batteries, tanks and suitable spraying means. For example, it may be sufficient to provide **the** ozone generator **40,** possibly also the oxygen concentrator **50,** and to connect the mixer **20** with the latter and with the tanks already present.

The invention is susceptible to numerous modifications and variants, all falling within the scope of protection of the attached claims. All details can be replaced by other technically equivalent elements, and the materials can be different depending on the technical needs, without departing from the scope of protection defined by the attached claims.

## Claims

1. A system for spraying ozonated water **(AO)** towards a surface to be treated **(T),** comprising:
- a device **(1)** for the continuous production of ozonated water **(AO);**
- means **(70)** for spraying the ozonated water **(AO)** towards the surface to be treated **(T);**
- a conduit **(17)** for the fluidic connection of said device **(1)** and of said spraying means **(70);**
wherein said conduit **(17)** is interposed between said spraying means **(70)** and said device **(1)** so that the ozonated water **(AO)** flowing out from said device **(1)** is continuously sprayed by said spraying means **(70).**

2. System according to claim 1, wherein said conduit **(17)** has no outlets so that all the ozonated water **(AO)** flowing out from said device **(1)** is sprayed continuously by said spraying means **(70).**

3. System according to claim 1 or 2, wherein said device **(1)** comprises a microbubble generator **(80)** so that the ozonated water **(AO)** produced by said device **(1)** includes microbubbles.

4. System according to claim 1, 2 or 3, wherein said device **(1)** comprises at least one mixer **(20)** which includes:
- a first inlet **(22)** fluidically connectable with means for supplying a gas containing ozone;
- a second inlet **(21)** fluidically connectable with water supply means;
- an outlet **(23)** for ozonated water **(AO);**
wherein said first inlet **(22),** said second inlet **(21)** and said outlet **(23)** are mutually configured to allow the mixing of gas **(O)** and water **(A)** so as to form ozonated water **(AO);**
wherein said conduit **(17)** is interposed between said outlet **(23)** and said spraying means **(70)** and connected therewith.

5. System according to claim 4, wherein said mixer **(20)** comprises:
- a first convergent frustoconical portion **(24)** including said second inlet **(21);**
- a second divergent truncated-conical portion **(26)** including said outlet **(23);**
- a third tubular portion **(25)** interposed between said first convergent portion **(24)** and second divergent portion **(26)** and fluidically connected therewith;
wherein said first, second and third portions **(24, 26, 25)** are mutually configured so as to form microbubbles in the ozonated water **(AO)** defining said microbubble generator **(80).**

6. System according to claim 4 or 5, further comprising valve means **(60)** acting on said first and/or second inlet **(22, 21)** to allow the selective inflow of gas **(O)** and/or water **(A)** in said at least one mixer **(20),** said valve means **(60)** being actuatable by an operator so as to allow the
selective spraying of ozonated water **(AO).**

7. System according to any one of claims 4 to 6, further comprising:
- a generator **(40)** for generating gas containing ozone defining said gas supply means, and/or
- an oxygen concentrator **(50)** having an air inlet **(51)** and an outlet **(53)** for the output of air enriched with oxygen fluidically connected with said generator **(40)** for generating gas containing ozone to supply it; and/or
- a tank **(30)** susceptible to contain water **(A),** said tank **(30)** comprising an opening **(31)** so as to allow the inflow of water **(A)** and an outlet **(33)** fluidically connected with said second inlet **(21)** of said mixer **(20).**

8. A device for the continuously production of ozonated water that can be used in a spraying system **(100)** according to one or more of the preceding claims, the device comprising:
- at least one generator **(40)** for generating gas containing ozone;
- at least one mixer **(20)** fluidically connected with said at least one generator **(40)** for generating gas containing ozone and with water supply means **(A)** so as to form ozonated water **(AO);**
wherein said at least one mixer **(20)** comprises an outlet **(23)** for the ozonated water **(AO)** fluidically connectable with spraying means **(70).**

9. A method for the continuous spraying of ozonated water **(AO)** towards a surface to be treated comprising the following steps:
- providing a spraying system **(100)** according to one or more of claims 1 to 6;
- spraying of the ozonated water **(AO)** towards the surface **(S)** to be treated.

10. Method according to claim 9, comprising a step for displacing said spraying system **(100)** along an advancement direction so as to selectively spray the ozonated water **(AO)** towards the entire surface to be treated.
